# EUROPEAN PATENT APPLICATION

(11) **EP 4 442 170 A1**
(43) Date of publication of application: **09.10.2024**
(21) Application number: 22901537.5
(22) Date of filing: 27.09.2022
(51) Int. Cl.: A47J 31/02, A47J 31/52, A47J 31/06, A47J 31/44, A47J 31/42

(54) **DRIP COFFEE MACHINE**

(30) Priority: 03.12.2021 KR 20210171548
(71) Applicant: LG Electronics Inc., Yeongdeungpo-gu Seoul 07336 (KR)
(72) Inventor: CHOI, Seung-Yeon, Seoul 08592 (KR); NAM, Hyeunsik, Seoul 08592 (KR); YANG, Jungkeun, Seoul 08592 (KR)
(74) Representative: Vossius & Partner Patentanwälte Rechtsanwälte mbB
(86) International application number: PCT/KR2022/014486
(87) International publication number: WO 2023/101177

(57) **Abstract**

The present invention relates to a drip coffee machine, comprising: a dripper for accommodating coffee powder and extracting liquid coffee; a water outlet unit having a water outlet hole through which water is dropped onto the coffee powder; a driving unit for changing the position of the water outlet hole; and a sensor unit for detecting the position of the driving unit.

## Description

### CROSS-REFERENCE TO RELATED APPLICATION

This application claims priority to and the benefit of Korean Patent Application No. 10-2021-0171548, filed on 2021.12.03, the disclosure of which is incorporated herein by reference in its entirety.

### BACKGROUND

### [Technical Field]

The embodiments of the present invention relate to a drip coffee machine.

### [Background Art]

The following description is only for the purpose of providing background information related to embodiments of the present disclosure, and the contents to be described do not necessarily constitute related art.

Recently, many users are making and drinking coffee at home in various ways. In this way, an apparatus that allows a user to prepare and drink coffee is called a coffee machine or coffee maker.

A drip coffee machine refers to an apparatus that extracts coffee using a drip coffee method.

The drip coffee method refers to a method of grinding coffee beans, pouring heated water over them, filtering out coffee powder, and extracting only liquid coffee.

The drip coffee method is commonly used not only in coffee shops but also in general households recently because it can best express the unique taste and aroma of coffee depending on the coffee production location or the degree of roasting of the coffee beans.

The most representative drip coffee methods are briefly explained as follows. First, the user inserts a paper filter into the dripper, and then place the dripper on a server and pour the ground coffee powder into the dripper. Next, heated water is poured and supplied to the coffee powder contained in the dripper using a hand drip motion determined by the user. Afterwards, the heated water passes through the ground coffee beans contained in the dripper to extract liquid coffee, and the liquid coffee passes through the filter and is finally placed on the server located at the bottom of the dripper.

The acidity or concentration of coffee extracted using the drip coffee method may vary depending on the way the user pours water into the coffee powder contained in the dripper, the amount of water supplied, and the time the coffee is extracted.

Recently, technology has been introduced for a function for grinding coffee beans, a function for supplying ground coffee powder, and a coffee machine that extracts coffee using the drip coffee method by spraying water on the coffee powder contained in the dripper.

As a prior literature related to the present invention, Republic of Korea Patent Publication No. 10-1913340 (hereinafter referred to as Prior Literature 1) discloses a drip coffee manufacturing apparatus.

The drip coffee manufacturing apparatus disclosed in Prior Document 1 includes a nozzle (i.e., water outlet) that discharges hot water, and an electric device that rotates the nozzle to implement a drip pattern.

In Prior Literature 1, the nozzle (i.e., water outlet) rotates back and forth by the a timing belt within a rail, and also revolves left and right by the rotation of the entire rail. Accordingly, the nozzle (i.e., water outlet) of Prior Literature 1 can implement a constant drip pattern by rotating while drawing a closed curved circle or ellipse, or an open curve on the plane of a drip area .

However, the nozzle rotation scheme in Prior Literature 1 is different from a basic hand drip motion, which supplies water in a spiral motion from the inside out toward the coffee powder, and then supplies water in a spiral motion from the outside to the inside. In other words, when using the driving device of Prior Literature 1, it is difficult to implement a basic hand drip type spiral motion.

Furthermore, the drip coffee manufacturing apparatus in Prior Literature 1 not only has difficulty implementing spiral motion, but also has the disadvantage of not specifically suggesting a sensor configuration that detects a driving unit that rotates the nozzle. Due to the absence of such a sensor configuration, there is a problem in that it is difficult to control the operation of the nozzle rotation.

As another prior literature related to the present invention, Republic of Korea Patent Publication No. 10-2013-0019466 (hereinafter referred to as Prior Literature 2) discloses a hand drip coffee machine.

The hand drip coffee machine disclosed in Prior Literature 2 uses a disk with a screw groove that guides the spiral movement of the water supply unit. The disc is located at the top of the dripper, and the water supply unit rotates along the screw groove of the disc to supply water toward the coffee powder. Accordingly, water is injected along the spiral trajectory of the screw groove.

However, according to Prior Literature 2, water is supplied according to the spiral trajectory of the screw groove formed on the disk, but there is a disadvantage that the spiral trajectory through which water is supplied is limited to the screw groove shape of the disk.

In other words, the drip coffee method must be able to appropriately change and control the radius of the spiral motion depending on the amount of coffee powder. As a result, the taste and aroma of coffee can be improved only when the coffee powder is properly moistened and achieving optimal extraction.

However, Prior Literature 2 has the disadvantage that it is difficult to apply various spiral motion radii because the spiral trajectory through which water is supplied is determined to be a single shape by the groove shape of the disk.

As another prior literature related to the present invention, Republic of Korea Patent Publication No. 10-1324817 (hereinafter referred to as Prior Literature 3) discloses a coffee hand drip apparatus.

The coffee hand drip apparatus disclosed in Prior Literature 3 is equipped with a rotation driving unit that rotates the dripper at the bottom of the dripper, and injects coffee powder and water into the dripper and allows the coffee extracted by gravity and centrifugal force to pass through the filter and be received in the server.

According to Prior Literature 3, the water received in the dripper can stay inside the dripper for a relatively long time due to the rotation of the dripper, so the coffee extraction speed can be adjusted and the rich taste and aroma of coffee can be obtained.

However, the coffee hand drip apparatus disclosed in Prior Literature 3 has the disadvantage of being far from the basic hand drip motion form, which supplies water in a spiral motion from the outside in toward the coffee powder, and supplies water in a spiral motion from the inside out.

In other words, Prior Literature 3 simply increases the time that the coffee powder and water are together by rotating the dripper to adjust the speed at which the water inside the dripper falls to the server, which is insufficient to implement the basic hand drip motion. This is because the unique taste and aroma of coffee can be further improved by the drip coffee method through a skilled hand drip motion.

In addition, as another prior literature related to the present invention, Republic of Korea Patent Publication No. 10-1775685 (hereinafter referred to as Prior Literature 4) discloses an apparatus for automatically supplying water and coffee bean.

The apparatus for automatically supplying water and coffee bean disclosed in Prior Literature 4 is mounted on a coffee machine that includes a coffee bean grinding unit that grinds coffee beans, and a coffee extraction unit that extracts coffee with the water supplied to the ground coffee beans.

In Prior Literature 4, the apparatus for automatically supplying water and coffee bean includes a coffee bean supply unit that supplies ground coffee beans to the coffee extraction unit, and a water supply unit that supplies water to the coffee extraction unit, and is configured to control an amount of water supplied according to an amount of coffee beans.

However, in the apparatus for automatically supplying water and coffee disclosed in Prior Document 4, a point where water is supplied to the ground coffee beans contained in the dripper is limited to one random point, and water is supplied only from one position without a hand drip motion. This completely excludes the hand drip motion, which is important in the drip coffee method, and considering that the taste and aroma, such as acidity and concentration, of the extracted coffee vary depending on the hand drip motion, there was an inadequacy in implementing the drip coffee method.

### [DISCLOSURE]

### [Technical Problem]

An object of the present invention is to provide a drip coffee machine that can improve the taste and aroma of coffee by spraying water evenly in a spiral motion toward a dripper containing coffee powder, similar to the hand drip coffee extraction method.

Another object of the present invention is to provide a coffee machine that allows a water outlet unit, which supplies water to the coffee powder, to adjust the spiral motion rotation radius and speed according to the set extraction time in order to implement the hand drip method. In other words, an object is to provide a drip coffee machine in which the spiral motion rotation radius of the water outlet unit can be set in response to the amount of coffee powder supplied to the dripper.

Another object of the present invention is to prevent a drip coffee machine that prevents the coffee powder ground by the grinder from accumulating in the water outlet unit when it falls into the dripper, and avoids the position of the water outlet unit from a coffee powder falling area when the grinder is in operation so that the coffee powder is evenly supplied to the dripper.

Another object of the present invention is to provide a drip coffee machine that can determine whether it is operating normally by measuring the rotational speed of first and second motors that provide the rotational force necessary for the spiral motion of the water outlet.

The objects of the present invention are not limited to the objects mentioned above, and other objects and advantages of the present invention that are not mentioned can be understood through the following description, and can be understood more clearly by the embodiments of the present invention. In addition, it will be readily apparent that the objects and advantages of the present invention can be realized by the means and combinations thereof indicated in the claims.

### [Technical Solution]

A drip coffee machine according to an embodiment of the present invention includes a grinder that grinds a coffee bean, a dripper that is located at a lower portion of the grinder, receives coffee powder ground in the grinder and extracts liquid coffee, a water outlet unit that includes a water outlet that allows water to fall into an inside of the dripper, a driving unit that changes a position of the water outlet unit within an upper drip area of the dripper, and a sensor unit that detects a position of the driving unit.

The driving unit includes a first ring gear that rotates at a first set speed, and a second ring gear that is coaxial with the first ring gear and is disposed to face a lower portion of the first ring gear and rotates at a second set speed.

The driving unit further includes an arm that includes one end connected between the first and second ring gears, and the other end contact-connected to at least a portion of the water outlet unit, and revolves the water outlet unit according to a rotation angle difference between the first and second ring gears.

The driving unit includes a first ring gear that rotates at a first set speed, and a second ring that is coaxial with the first ring gear and is disposed to face a lower portion of the first ring gear and rotates at a second set speed. In addition, the driving unit further includes a first motor that provides a rotational force to the first ring gear, and a second motor that provides the rotational force to the second ring gear.

The first motor includes a first output shaft that rotates at a set speed, and a first driving gear that is coupled to the first output shaft to rotate.

The second motor includes a second output shaft that rotates at a set speed, and a second driving gear that is coupled to the second output shaft and rotates.

The first and second motors may be disposed in the same center upward and downward.

The first output shaft may protrude from a lower portion of the first motor.

The second output shaft may be formed to protrude from an upper portion of the second motor and face the first output shaft.

The first and second driving gears may be located parallel to each other at intervals upward and downward.

The driving unit includes a first ring gear that rotates at a first set speed, and a second ring gear that is coaxial with the first ring gear and is disposed to face a lower portion of the first ring gear and rotates at a second set speed.

In this case, the sensor unit includes a ring gear rotation detecting unit that detects the rotation of the first and second ring gears.

The ring gear rotation detecting unit includes a first ring gear rotation detecting unit that detects the rotation of the first ring gear, and a second ring gear rotation detecting unit that detects the rotation of the second ring gear.

The first ring gear rotation detecting unit includes a first magnet that is installed on an outside of the first ring gear, and a first Hall sensor that detects a position of the first magnet.

The second ring gear rotation detecting unit includes a second magnet that is installed on an outside of the second ring gear, and a second Hall sensor that detects a position of the second magnet.

The driving unit includes a first ring gear housing that accommodates the first ring gear inside, and a second ring gear housing that is connected to a lower side of the first ring gear housing and accommodates the second ring gear inside.

The first Hall sensor may be fixed to one side of the first ring gear housing and be disposed to face the first magnet by being spaced apart from the first magnet on an outside of the first ring gear.

The second Hall sensor may be fixed to one side of the second ring gear housing and be disposed to face the second magnet by being spaced apart from the second magnet on an outside of the second ring gear.

The first and second Hall sensors may be formed at positions where the first and second Halls face each other upward and downward.

The driving unit includes a first ring gear that rotates at a first set speed, a second ring that is disposed at the same center as the first ring gear and is disposed to face a lower portion of the first ring gear, and rotates at a second set speed, a first motor that includes a first output shaft and first driving gear coupled to the first output shaft and rotating to provide a rotational force to the first ring gear, and a second motor that includes a second output shaft and second driving gear coupled to the second output shaft and rotating to provide the rotational force to the second ring gear.

In this case, the sensor unit includes a motor motion detecting unit that detects an operation of each of the first and second motors.

The motor motion detecting unit includes a first driving gear rotation detecting unit that detects the rotation of the first driving gear, and a second driving gear rotation detecting unit that detects the rotation of the second driving gear.

The first driving gear rotation detecting unit is located opposite the first driving gear and may include a first photo interrupter that detects the rotation of the first driving gear.

The second driving gear rotation detecting unit is located opposite the second driving gear and may include a second photo interrupter that detects the rotation of the second driving gear.

The first and second photo interrupters may be disposed to be spaced apart from each other on a single board vertically disposed on one sides of the first and second driving gears.

In addition, the first driving gear rotation detecting unit may be installed on the first motor and may include a first encoder that detects the rotation of the first motor.

The second driving gear rotation detecting unit may be installed on the second motor and may include a second encoder that detects the rotation of the second motor.

The driving unit includes a first idle gear that is geared between the first driving gear and the first ring gear and transmits the rotational force of the first motor to the first ring gear, and the second driving gear that is geared between the second driving gear and the second ring gear and transmits the rotational force of the second motor to the second ring gear.

The first and second idle gears may be disposed in the same center upward and downward.

The first and second idle gears may be axially connected to an idle shaft.

The idle shaft includes a first shaft body to which the first idle gear is axially connected, a second shaft body that extends to a lower portion of the first shaft body and to which the second idle gear is axially connected, and a flange portion that is formed at a boundary between the two and second shaft bodies.

Based on the detection result of the sensor unit, the driving unit may avoid the position of the water outlet from an area where the coffee powder ground when the grinder is operated falls.

A drip coffee machine according to another aspect of the present invention includes a case, a water tank that is located at a rear upper end of the case and stores water, a hopper that is located at a front upper end of the case and stores coffee beans, a grinder that is located at a lower portion of the hopper and grinds a coffee bean supplied from the hopper, a dripper that is located at a lower portion of the grinder, receives the coffee powder ground in the grinder to extract liquid coffee, a water outlet unit that includes a water outlet that allows water to fall into an inside of the dripper, a driving unit that changes a position of the water outlet within an upper drip area of the dripper, and a sensor unit that detects a position of the driving unit.

The driving unit includes a first ring gear that rotates at a first set speed, a second ring that is disposed at the same center as the first ring gear and is disposed to face a lower portion of the first ring gear, and rotates at a second set speed, and an arm that includes one end connected between the first and second ring gears, and the other end contact-connected to at least a portion of the water outlet unit, and revolves the water outlet unit according to a rotation angle difference between the first and second ring gears. In addition to this, the driving unit further includes a first motor that provides a rotational power to the first ring gear and a second motor that provides the rotational power to the second ring gear.

The driving unit includes a first ring gear that rotates at a first set speed, and a second ring gear that is coaxial with the first ring gear and is disposed to face a lower portion of the first ring gear and rotates at a second set speed.

In this case, the sensor unit further includes a ring gear rotation detecting unit that detects the rotation of the first and second ring gears.

The ring gear rotation detecting unit includes a first ring gear rotation detecting unit that detects the rotation of the first ring gear, and a second ring gear rotation detecting unit that detects the rotation of the second ring gear.

The first ring gear rotation detecting unit includes a first magnet that is installed on an outside of the first ring gear, and a first Hall sensor that detects a position of the first magnet.

The second ring gear rotation detecting unit includes a second magnet that is installed on an outside of the second ring gear, and a second Hall sensor that detects a position of the second magnet.

The driving unit includes a first ring gear that rotates at a first set speed, a second ring gear that is disposed at the same center as the first ring gear and faces a lower portion of the first ring gear, and rotates at a second set speed, a first motor that includes a first output shaft and a first driving gear coupled to the first output shaft and rotating to provide a rotational force to the first ring gear, and a second motor that includes a second output shaft and a second driving gear coupled to the second output shaft and rotating to provide the rotational power to the second ring gear.

In this case, the sensor unit includes a motor motion detecting unit that detects an operation of each of the first and second motors.

The motor motion detecting unit includes a first driving gear rotation detecting unit that detects the rotation of the first driving gear, and a second driving gear rotation detecting unit that detects the rotation of the second driving gear.

The first driving gear rotation detecting unit is located opposite the first driving gear and may include a first photo interrupter that detects the rotation of the first driving gear.

The second driving gear rotation detecting unit is located opposite the second driving gear and may include a second photo interrupter that detects the rotation of the second driving gear.

### [Advantageous Effect]

According to an embodiment of the present invention, like a professional drip coffee extraction method, water can be supplied evenly while the water outlet unit operates in a spiral motion toward the dripper containing the coffee powder with a rotation radius and speed set. The acidity or concentration of coffee extracted using the drip coffee method can be determined by the way the user pours water into the coffee powder contained in the dripper. That is, according to the hand drip motion, the original acidity of the coffee and taste and aroma of the coffee can be determined. By adjusting the spiral motion rotation radius and speed of the water outlet unit appropriately in response to the amount of coffee powder contained in the dripper, coffee with excellent taste and aroma can be extracted.

In addition, according to an embodiment of the present invention, before the grinder operation, the position of the water outlet is moved to the outermost area from the coffee powder falling area, preventing ground coffee powder from accumulating in the water outlet unit, and preventing the phenomenon of coffee powder not being uniformly loaded on the dripper due to positional interference of the water outlet unit.

In addition, according to an embodiment of the present invention, it is possible to monitor in real time whether the motor that provides the rotational force necessary for the spiral motion of the water outlet unit is operating normally, so that malfunctions of the apparatus can be quickly determined, and the optimal drip coffee extraction method can be implemented.

In addition to the above-described effects, specific effects of the present invention are described below while explaining specific details for carrying out the invention.

### [Description of Drawings]

FIG. 1 is a perspective view of a drip coffee machine according to an embodiment of the present invention.
FIG. 2 is a front view of a drip coffee machine according to an embodiment of the present invention.
FIG. 3 is a schematic cross-sectional view of a drip coffee machine according to an embodiment of the present invention.
FIG. 4 is a diagram of the main parts of a drip coffee machine according to an embodiment of the present invention.
FIG. 5 is an enlarged front perspective view of a driving unit of a drip coffee machine according to an embodiment of the present invention.
FIG. 6 is an enlarged exploded perspective view of a driving unit of a drip coffee machine according to an embodiment of the present invention.
FIG. 7 is an enlarged rear perspective view of a driving unit of a drip coffee machine according to an embodiment of the present invention.
FIG. 8 is a diagram showing a side structure of a driving unit of a drip coffee machine according to an embodiment of the present invention.
FIG. 9 is a diagram showing a state in which a magnet is attached to a ring gear constituting a driving unit of a drip coffee machine according to an embodiment of the present invention.
FIG. 10 is a diagram showing a state in which a Hall sensor is installed facing the magnet attached to the ring gear in FIG. 9.
FIG. 11 is a diagram showing an installation structure of a revolving arm revolved by a driving unit of a drip coffee machine according to an embodiment of the present invention.
FIG. 12 is a diagram showing a state in which a water outlet is located in a center by an operation of a driving unit of a drip coffee machine according to an embodiment of the present invention.
FIG. 13 is a diagram showing a state in which a water outlet is located to avoid a powder falling area by an operation of a driving unit of a drip coffee machine according to an embodiment of the present invention.
FIG. 14 is a conceptual diagram illustrating a spiral motion according to a driving unit of a drip coffee machine according to an embodiment of the present invention.
FIGS. 15 to 26 are conceptual diagrams showing a spiral motion for each step according to a driving unit of a drip coffee machine according to an embodiment of the present invention.
FIG. 27 is a diagram showing an exemplary trajectory of a spiral motion according to a driving unit of a drip coffee machine according to an embodiment of the present invention.
FIG. 28 is a graph showing a gear rotation angular speed and gear rotation angle change for implementing spiral motion of sections 1 and 2 in FIG. 27.

### [Mode for Invention]

The above-described objectives, features and advantages are specifically described with reference to the attached drawings hereunder such that one having ordinary skill in the art to which the disclosure pertains may easily implement the technical spirit of the disclosure. In describing the disclosure, detailed description of known technologies in relation to the disclosure is omitted if it is deemed to make the gist of the disclosure unnecessarily vague. Below, preferred embodiments of the disclosure are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and a first component may be a second component unless stated to the contrary.

Throughout the disclosure, each component may be provided as a single one or a plurality of ones, unless explicitly stated to the contrary.

Hereinafter, when any component is arranged at "an upper portion (or a lower portion)" of the component or "on (or under") of the component, any component can be arranged in contact with an upper surface (or a lower surface) of the component, and another component can be interposed between the component and any component arranged on (or under) the component.

Further, when one component is described as being "connected", "coupled", or "connected" to another component, the components can be directly connected or able to be connected to the other component; however, it is also to be understood that an additional component can be "interposed" between the two components, or the two components can be "connected", "coupled" or "connected" through an additional component.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

In addition, as used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

In the following description, coffee beans refer to roasted coffee beans, not the raw coffee beans harvested from the coffee tree.

In the following description, the size of ground coffee powder (or powder) may vary depending on preference and type of coffee bean. Ground coffee powder (or powder) does not mean coffee powder with a specific size, but coffee powder (or powder) with various sizes that can be changed depending on preference and type of coffee bean.

In the following description, a coffee machine refers to an apparatus that grinds coffee beans in a grinder, mixes the ground coffee powder with water, and dissolves the coffee ingredients in the water to extract liquid coffee.

In the following description, extracting coffee means supplying coffee powder to the dripper and then supplying water to bring the coffee powder and water into contact with each other to create liquid coffee containing coffee ingredients extracted from the coffee powder.

Hereinafter, the present invention will be described with reference to drawings showing the configuration of a drip coffee machine according to an embodiment of the present invention.

### [Overall structure of a drip coffee machine]

Hereinafter, the overall structure of a drip coffee machine according to an embodiment of the present invention will be described in detail with reference to the attached drawings.

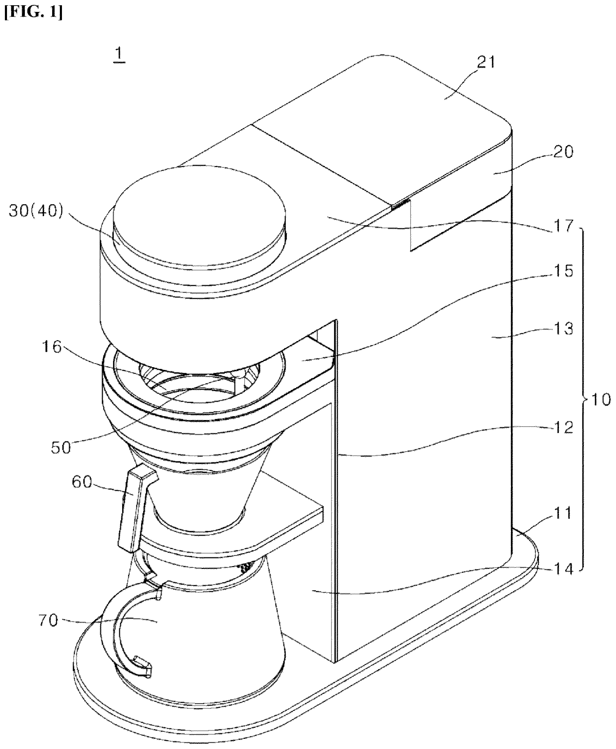

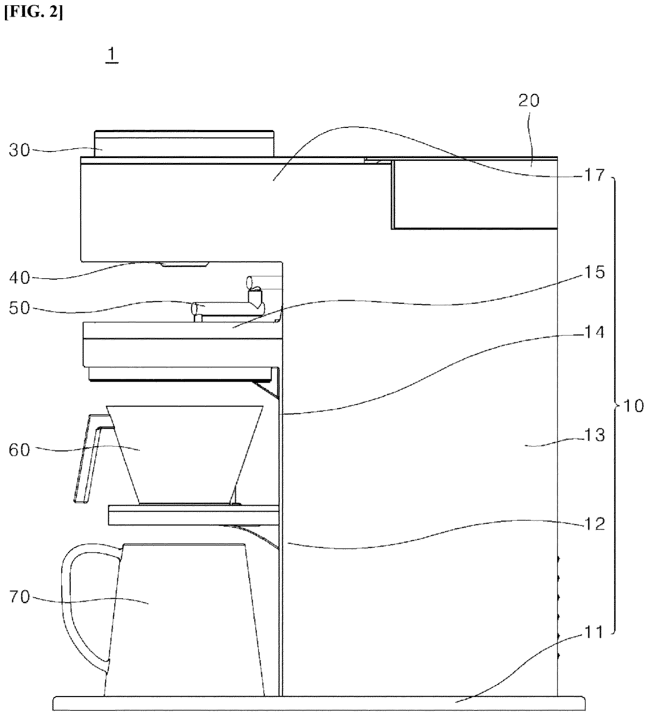

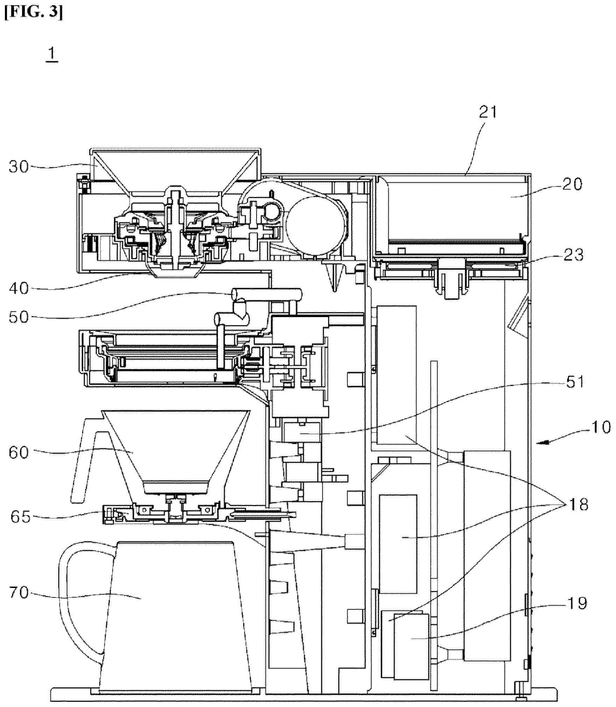

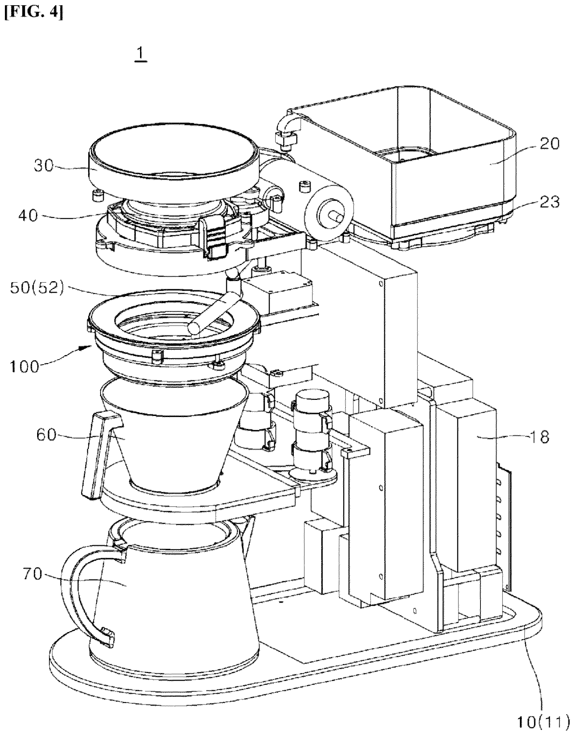

FIG. 1 is a perspective view of a drip coffee machine according to an embodiment of the present invention, FIG. 2 is a front view of a drip coffee machine according to an embodiment of the present invention, FIG. 3 is a schematic cross-sectional view of a drip coffee machine according to an embodiment of the present invention, and FIG. 4 is a diagram of the main parts of a drip coffee machine according to an embodiment of the present invention.

As shown, a drip coffee machine 1 according to the present invention includes a case 10, a water tank 20, a hopper 30, a grinder 40, a water outlet unit 50, a dripper 60, and a coffee server 70.

The case 10 refers to a main body that connects and couples the water tank 20, hopper 30, grinder 40, water outlet unit 50, dripper 60, and coffee server 70 with each other.

The case 10 serves to support each of the water tank 20, hopper 30, grinder 40, water outlet unit 50, dripper 60, and coffee server 70 to be installed at a designated position.

The case 10 may be provided in a manner in which multiple case parts are assembled.

For example, the case 10 includes a base part 11, an inner case 12, an outer case 13, a first front part 14, a second front part 15, and an upper case 16.

The base part 11 is formed to have a plate shape to form the bottom of the case 10. The base part 11 provides a seating surface on which the coffee server 70 is seated.

The inner case 12 is a frame installed at a set height at the rear of a front space where the hopper 30, grinder 40, dripper 60, and coffee server 70 are disposed upward and downward.

The outer case 13 is a frame installed standing at the rear of the inner case 12. The outer case 13 is assembled with the inner case 13 from front and rear to form a box-shaped body.

A predetermined box-shaped space is provided between the inner case 12 and the outer case 13. Through this box-shaped space, various parts including multiple PCBs, PCB supporters supporting multiple PCBs, and blowing fans may be disposed.

The water tank 20 may be located at the top of the outer case 13.

The first front part 14 is installed upright to be located in front of the inner case 12.

The second front part 15 is a frame that is coupled to protrude forward from the first front part 14.

A circular hole 16 is formed inside the plane of the second front part 15, and through this circular hole, the pipe of the water outlet unit makes a spiral motion and supplies water to the inside of the dripper.

A driving unit 100 that implements the spiral motion of the water outlet unit is located in the second front part 15.

The upper case 17 is coupled to the tops of the inner case 12 and first front part 14.

The hopper 30 may be located in the upper inner portion of the upper case 17, and the grinder 40 may be disposed in the lower inner portion of the upper case 17 at a position parallel to the hopper 30 upward and downward.

The water tank 20 refers to a water storage container that stores water to be supplied to the dripper 60 containing ground coffee powder when extracting coffee.

The water tank 20 may be located at the top of the outer case 13.

In addition, the water tank 20 further includes a heating device capable of heating the stored water to a set temperature.

For example, an induction heating coil may be further provided at the bottom of the water tank 10 to heat the water stored in the water tank 10 using an induction heating method.

In addition, the water tank 20 further includes a cover 21. The cover 21 prevents contamination of the water stored inside the water tank 20 and makes it easy to supply water and clean the inside of the water tank. The cover 21 may be coupled to the upper portion of the water tank 20 in various ways that can be opened and closed.

The water stored in the water tank 20 may be heated to a temperature suitable for coffee extraction and then supplied toward the dripper 60 through the water outlet unit 50.

The hopper 30 is a device that supplies coffee beans to the grinder.

The hopper 30 is a container that may store a set amount of coffee beans, and may supply coffee beans for coffee extraction to the grinder 40 in a set amount.

The grinder 40 refers to a device that grinds coffee beans.

The grinder 40 receives roasted coffee beans introduced through the hopper 30 and grinds the coffee beans into powder of a set size or less.

For example, the grinding degree of coffee powder ground in a grinder may be appropriately adjusted.

In general, the grinding degree may vary depending on the type of coffee bean, and the degree of coffee extraction may also vary accordingly, so it may be possible to set an appropriate grinding degree depending on the user's preference and/or the type of coffee bean.

The grinder 40 may be located at the upper portion of the dripper. Also, the coffee powder ground in the grinder 40 is supplied by falling toward the dripper 60 located at the lower portion of the grinder 40.

In addition, the grinder 40 may be located at the upper portion of the water outlet unit 50.

Specifically, the water outlet unit 50 may be located between the grinder 40 and the dripper 60.

Preferably, when the ground coffee powder from the grinder 40 falls into the inside of the dripper and is supplied to the dripper, it is preferable that the water outlet unit 50 avoids interfering with the falling of the coffee powder by moving away from an area where the coffee powder falls (powder falling area). Also, after the coffee powder is supplied to the dripper 60, the avoidance operation of the water outlet unit 50 is released, and the water outlet unit 50 moves to a position facing the inside of the dripper 60 to uniformly supply water for coffee extraction.

The water outlet unit 50 refers to a device that uniformly supplies water from the water tank 20 to the coffee powder inside the dripper 60 to extract liquid coffee after the coffee powder ground in the grinder 40 falls and is supplied to the dripper 60.

The water outlet unit 50 is located at the upper portion of the dripper 60, and may supply water by dropping the water toward the dripper 60.

The water outlet unit 50 includes a pump 51 that is connected to the water tank 20 to move water in the supply direction, and a pipe 52 connected to the pump 51.

In addition, the water outlet unit 50 may be connected to the driving unit 100 to enable implementation of a spiral motion.

The water outlet 55 of the water outlet unit 50 may be connected to the arm 150 of the driving unit 100, and this structure makes it possible to drive the water outlet unit 50, that is, the water outlet 55, in a spiral motion. As a result, the taste and aroma, such as acidity and concentration, of coffee can be improved.

The driving unit 100 changes the position of the water outlet 55 within the upper drip area of the dripper 60 (that is, an area where water falls toward the coffee powder contained in the dripper).

In addition, the driving unit 100 may move the water outlet unit 50 to a position as far away from the coffee powder falling area as possible before the operation of the grinder 40. Accordingly, it prevents coffee powder from accumulating in the water outlet unit 50 and allows coffee powder to accumulate uniformly in the dripper 60.

The dripper 60 is a device that receives coffee powder ground in the grinder 40 and extracts liquid coffee by bringing water supplied from the water outlet unit 50 into contact with the coffee powder.

The dripper 60 may have a shape with an open upper portion. Accordingly, the coffee powder and water may fall to the upper portion of the dripper 60 and be received inside the dripper 60.

In addition, a filter may be installed and used inside the dripper 60. The filter extracts only the liquid coffee component (i.e., coffee) from the coffee powder mixed with water, and a disposable or multi-use filter may be used.

The dripper 60 stably supports the filter and may have a shape that allows liquid coffee extracted through the filter to fall to the coffee server 70 below.

In addition, the dripper 60 allows the coffee powder ground in the grinder 40 to fall smoothly and be supplied to the inside of the dripper 60, and has a shape that allows the water supplied through the water outlet unit 50 to be well received into the inside of the dripper 60.

For example, it is preferable for the upper portion (i.e., the inlet) of the dripper 60 to be shaped like a funnel with a larger cross-sectional area than that of the lower portion (i.e., the outlet).

Meanwhile, the dripper 60 may be further equipped with an automatic flow control valve 65. The automatic flow control valve 65 may open and close the lower portion (i.e., outlet) of the dripper 60 or adjust the flow rate according to the drip recipe desired by the user. After the drip operation of liquid coffee is completed, the flow control valve 65 may be automatically closed to stop water extraction.

The coffee server 70 may be disposed below the dripper 60.

The coffee server 70 refers to a liquid coffee storage container that receives the liquid coffee extracted through the lower portion (i.e., outlet) of the dripper 60 and stores the liquid coffee so that the user can drink it.

The coffee server 70 may be coupled to the case 10, more specifically, the base part 11 in a detachable manner. Accordingly, the coffee server 70 may be separated from the case 10 and taken out while containing the extracted coffee.

### [Detailed configuration of the driving unit and sensor unit]

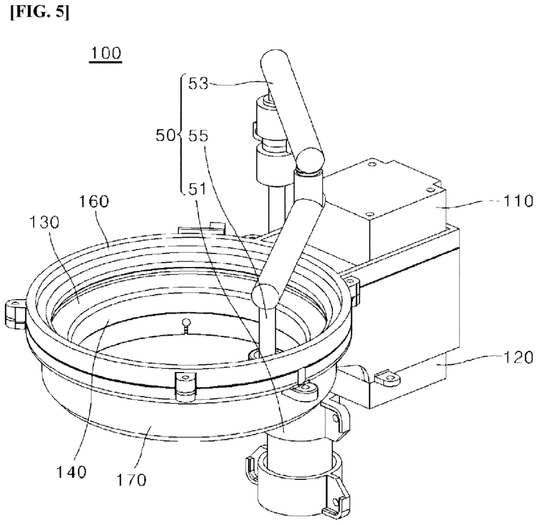

Hereinafter, with reference to FIGS. 5 to 11, the configurations of the driving unit 100 that changes the position of the water outlet unit 50 within a drip area and the sensor units 200 and 300 that detect the position of the driving unit 100 will be described in detail.

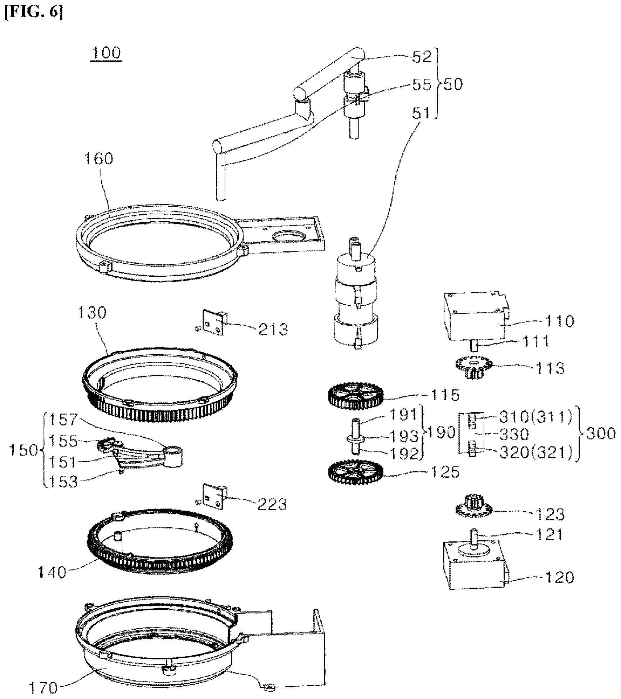

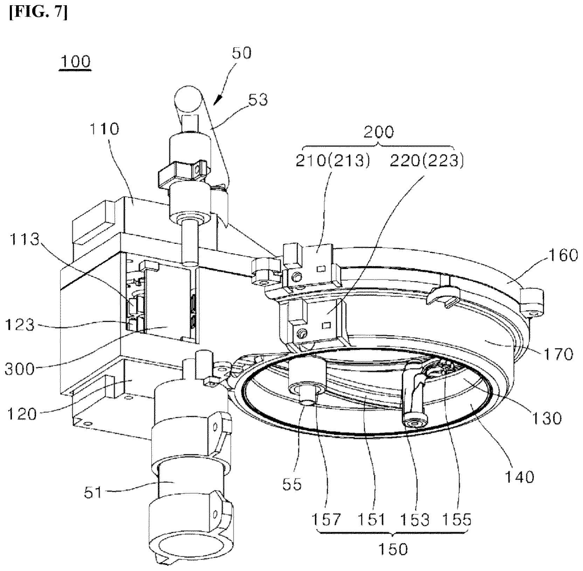

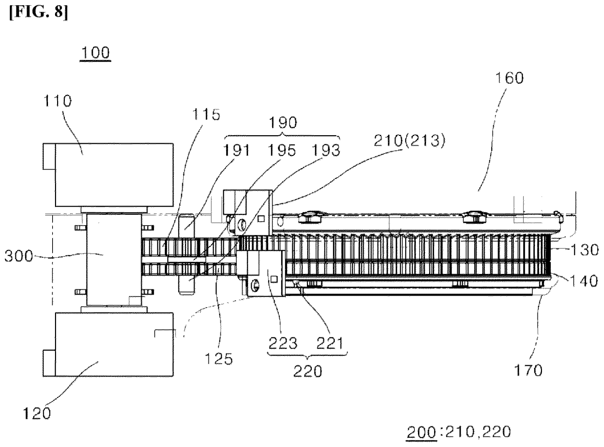

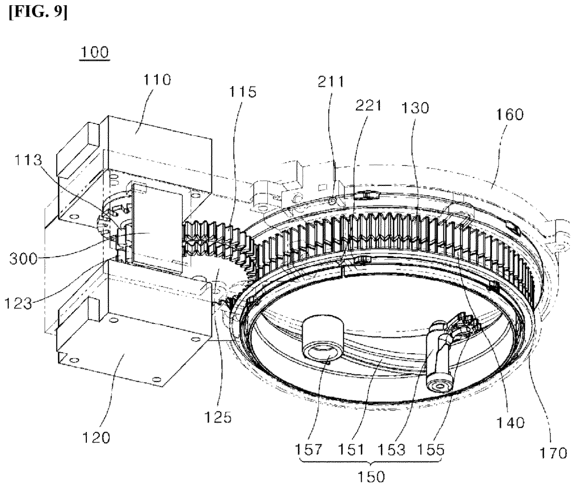

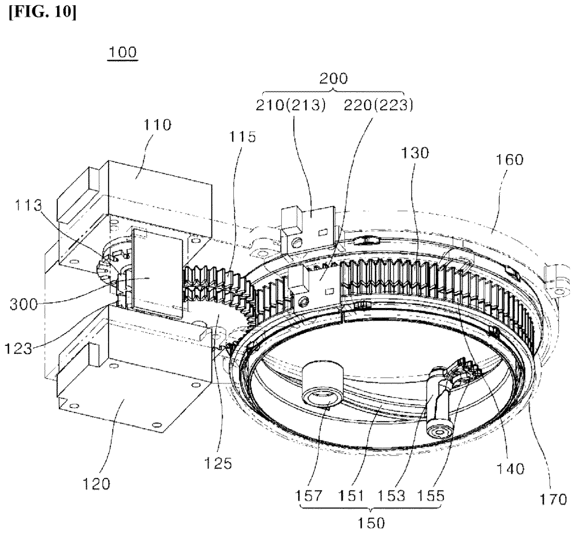

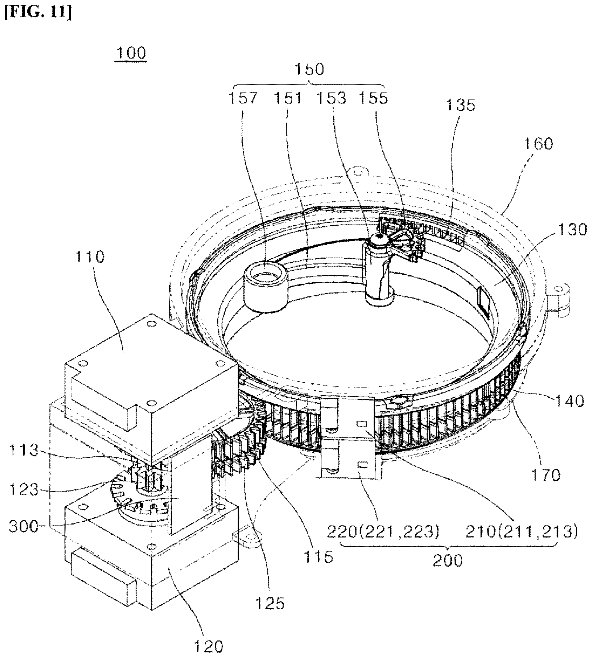

FIG. 5 is an enlarged front perspective view of a driving unit of a drip coffee machine according to an embodiment of the present invention, FIG. 6 is an enlarged exploded perspective view of the driving unit, FIG. 7 is an enlarged rear perspective view of the driving unit, FIG. 8 is a diagram showing a side structure of the driving unit, FIG. 9 is a diagram showing a state in which a magnet is attached to the first and second ring gears constituting the driving unit, FIG. 10 is a diagram showing a state in which a first and second Hall sensors are installed facing the first and second magnets, and FIG. 11 is a diagram showing an installation structure of an arm that revolves the water outlet unit by the driving unit of a drip coffee machine.

Referring to FIGS. 5 to 7, the driving unit 100 is connected to at least a portion of the water outlet unit 50, and controls the supply direction of water supplied from the water outlet unit 50 in a spiral motion.

The water outlet unit 50 includes a pump 51 that supplies water from the water tank, a plurality of pipes 53 that are connected to the pump 51 to flow water in a set direction, and the water outlet 55 that is connected to the end of the pipe 53 to supply water toward the coffee powder.

The driving unit 100 is connected to the water outlet 55, and controls the water supply direction of the water outlet 55 in a spiral motion.

In the drip coffee machine 1 according to an embodiment of the present invention, the driving unit 100 includes a first motor 110, a second motor 120, a first ring gear 130, a second ring gear 140, an arm 150, a ring gear detecting unit 200, and a motor operation detecting unit 300.

The first ring gear 130 refers to a ring-shaped gear that rotates at a first set speed.

The second ring gear 140 is a ring-shaped gear that rotates at a second set speed, and may be disposed to face the lower portion of the first ring gear 130 at the same center as the first ring gear 130.

The arm 150 is an arc-shaped arm that rotates between the first and second ring gears 130 and 140 according to the rotation angle difference due to the speed difference between the first and second ring gears 130 and 140.

For example, the arm 150 includes an arc-shaped link-shaped arm body 151 that forms the body of the arm 150.

Referring to FIGS. 6 and 11, one end of the arm body 151 is provided with a revolving shaft 153 connected between the first and second ring gears 130 and 140. A fan-shaped arc gear 155 is provided on the upper end of the revolving shaft 153, and the arc gear 155 is connected so as to engage with the internal gear part 135 provided on the upper inner diameter of the first ring gear 130.

In addition, the other end of the arm body 151 forms a free end in a cantilever shape.

If there is a difference in rotation angle between the first and second ring gears 130 and 140, the arc gear 155 may revolve around the revolving axis 153. In this case, the other end of the arm body 151 may move in an arc direction between the centers of the first and second ring gears 130 and 140 and the inner walls of the first and second ring gears 130 and 140.

A circular insertion hole 157 is provided at the other end of the arm body 151, and at least a portion of the water outlet unit 50 that discharges water toward the coffee powder, that is, the water outlet 55, may be contact-connected through the insertion hole 157.

As a result, the arm 150 may revolve in the inner circular space of the first and second ring gears 130 and 140 due to a difference in rotation angle between the first and second ring gears 130 and 140. In addition, the end of the water outlet 55 is bound to the arm 150 and revolves together with the arm 150, and a water supply direction in which water is supplied toward the coffee powder may be controlled using a spline motion.

Meanwhile, the driving unit 100 further includes the first motor 110 and the second motor 120.

The first motor 110 provides a rotational force so that the first ring gear 130 rotates at the first set speed.

The second motor 120 provides a rotational force so that the second ring gear 140 rotates at the second set speed. Here, the second set speed may be the same as the first set speed or may be set differently. The first and second set speeds mean that the first and second motors 110 and 120 may be individually controlled.

For example, the first motor 110 includes a first output shaft 111 and a first driving gear 113.

The first output shaft 111 is a driving shaft of the first motor 110, and rotates at a set torque and speed under the control of the first motor 110.

The first driving gear 113 may be coupled to the first output shaft 111 and rotate.

Likewise, the second motor 120 includes a second output shaft 121 and a second drive gear 123.

The second output shaft 121 is a driving shaft of the second motor 120, and rotates at a set torque and speed under the control of the second motor 120.

The second driving gear 123 may be coupled to the second output shaft 121 and rotate.

Preferably, the first motor 110 and the second motor 120 may be disposed upward and downward and at the same center. Also, the first output shaft 111 may protrude from the lower portion of the first motor 110, and the second output shaft 121 may protrude from the upper portion of the second motor 120.

Accordingly, the first output shaft 111 and second output shaft 121 may be disposed at the same center while facing each other upward and downward.

According to the arrangement structure of the first and second output shafts 111 and 121, the first and second driving gears 113 and 123 are respectively coupled to the first and second output shafts 111 and 121, and may be arranged parallel to each other.

According to the parallel arrangement structure of the first and second driving gears 113 and 123, the first and second photo interrupters 311 and 321, which will be described later, are mounted together on a single substrate 330 at a vertical distance to detect the rotational speed of the first and second driving gears 113 and 123. As a result, the installation structure of the motor motion detecting unit 300 may be simplified, and the measurement precision of the first and second photo interrupters 311 and 321 may be improved.

The motor motion detecting unit 300 detects the rotational motion of the first motor 110 and the rotational motion of the second motor.

For example, the motor motion detecting unit 300 includes a first drive gear rotation detecting unit 310 and a second drive gear rotation detecting unit 320.

The first driving gear rotation detecting unit 310 detects the rotation of the first driving gear 113. The first driving gear 113 is connected to the first output shaft 111 through which the rotational force of the first motor 110 is output. Accordingly, the first driving gear rotation detecting unit 310 may detect the rotation of the first driving gear 113 and identify the rotational operation of the first motor 110.

The second driving gear rotation detecting unit 320 detects the rotation of the second driving gear 123. The second driving gear 123 is connected to the second output shaft 121 through which the rotational force of the second motor 120 is output. Accordingly, the second driving gear rotation detecting unit 320 may detect the rotation of the first driving gear 113 and identify the rotational operation of the first motor 110.

As a specific example, referring to FIG. 6, the first driving gear rotation detecting unit 310 is located opposite the first driving gear 113 and includes a photo interrupter 311 that detects the rotation of the first driving gear 113.

In addition, the second driving gear rotation detecting unit 320 is located opposite the second driving gear 123 and includes a second photo interrupter 321 that detects the rotation of the second driving gear 123.

Preferably, the first and second photo interrupters 311 and 321 may be installed together on a single board (PCB) 330 disposed in a vertical direction to face one sides of the first and second driving gears 113 and 123. In addition, the first and second photo interrupters 311 and 321 may be installed upward and downward at a certain distance from each other.

A first slit may be additionally formed in the first driving gear 113, and the first photo interrupter 311 may detect the first slit to measure the rotational speed of the first motor 110.

Likewise, a second slit may be additionally formed in the second driving gear 123, and the second photo interrupter 321 may detect the second slit to measure the rotation speed of the second motor 120.

As another example, although not separately shown, the motor motion detecting unit 300 may include a plurality of encoders, that is, first and second encoders. The first encoder is installed in the first motor 110 and may detect the rotational motion of the first motor 110. The second encoder is installed in the second motor 120 and may detect the rotational motion of the second motor 120.

Here, compared to the case where the motor motion detecting unit 300 detects each rotation motion by mounting a plurality of encoders on the first and second motors 110 and 120, it is more preferable that the first and second photo interrupters 311 and 321 are used.

When the motor motion detecting unit 300 includes the first and second photo interrupters 311 and 321, there are the following advantages compared to using the plurality of encoders.

First, when using the first and second photo interrupters 311 and 321, the size of the motor motion detecting unit 300 may be miniaturized compared to when using the plurality of encoders, and thus, the overall size of the first and second motors 11 and 120 may be significantly reduced. For this reason, there is an advantage in miniaturizing and lightweighting the product.

Second, when using the first and second photo interrupters 311 and 321, the product price may be lowered compared to when using the plurality of encoders, which has the advantage of excellent price competitiveness.

Third, the first and second photo interrupters 311 and 321 may be modularized on one side of the first and second driving gears 113 and 123 through the single substrate 330 and installed at a certain distance. Accordingly, overall replacement and repair work is easy in the event of failure or malfunction, and there is an advantage that overall maintenance is easy because separation and replacement of the first and second motors 110 and 120 are not required.

In addition, the driving unit 100 includes a first idle gear 115 and a second idle gear 123.

The first idle gear 115 may be gear-connected between the first drive gear 113 and the first ring gear 130. The first idle gear 115 serves to transmit the rotational force of the first motor 110 to the first ring gear 130.

The first idle gear 115 may be provided in the form of a spur gear. One side of the first idle gear 115 is gear-connected by engaging with the first drive gear 113, and the other side of the first idle gear 115 is gear-connected by engaging with the outer diameter of the first ring gear 130. Accordingly, the first idle gear 115 may transmit the rotational force of the first gear 113 to the first ring gear 130 with low noise and minimize the loss of rotational force.

The second idle gear 125 may be gear-connected between the second drive gear 123 and the first ring gear 140. The second idle gear 125 serves to transmit the rotational force of the second motor 120 to the second ring gear 140.

The second idle gear 125 may be provided in the form of a spur gear. One side of the second idle gear 125 is gear-connected by engaging with the second drive gear 123, and the other side of the second idle gear 125 is gear-connected by engaging with the outer diameter of the second ring gear 140. Accordingly, the second idle gear 125 may transmit the rotational force of the second gear 123 to the second ring gear 140 with low noise and minimize the loss of rotational force.

Meanwhile, the first idle gear 115 and second idle gear 125 may be disposed upward and downward and parallel to each other and have the same center.

To this end, the first idle gear 115 and second idle gear 125 may be axially connected to the idle shaft 190.

For example, referring to FIG. 6, the idle shaft 190 includes a first shaft body 191, a second shaft body 192, and a flange part 193.

The first shaft body 191 refers to a part where the first idle gear 115 is axially connected at the upper portion thereof.

The second shaft body 192 refers to a part where the second idle gear 125 is axially connected to the lower portion of the first idle gear 115. The second shaft body 192 extends to the lower portion of the first shaft body 191.

The flange part 193 refers to a flange-shaped portion formed at a boundary between the first shaft body 191 and the second shaft body 192.

The first idle gear 115 axially connected to the first shaft body 191 may be disposed in parallel upward and downward and rotatably coupled with the second idle gear 125 axially connected to the second shaft body 192 and the flange part 193.

The ring gear detecting unit 200 detects a rotational displacement, that is, a rotation angle difference, between the first ring gear 130 and the second ring gear 140.

For example, the ring gear rotation detecting unit 200 includes a first ring gear rotation detecting unit 210 and a second ring gear rotation detecting unit 220.

The first ring gear rotation detecting unit 210 detects the rotational displacement of the first ring gear 130.

As a specific example, referring to FIGS. 9 and 10, the first ring gear rotation detecting unit 210 includes a first magnet 211 and a first Hall sensor 213.

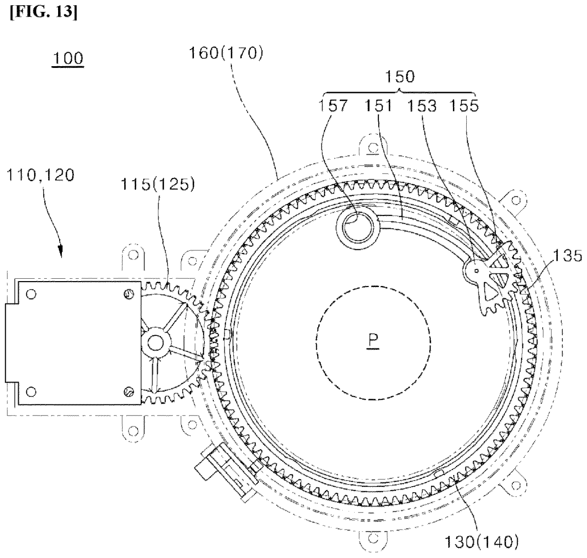

The first magnet 211, together with the first Hall sensor 213, detects the position of the first ring gear 130 when the grinder operates to grind coffee beans, and is used to revolve the water outlet 55 so that the water outlet 55 may avoid the coffee powder falling area P (see FIG. 13).

The first Hall sensor 213 detects the first magnet 211 provided at the outer setting position of the first ring gear 130.

The second ring gear rotation detecting unit 220 detects the rotational displacement of the second ring gear 140.

As a specific example, referring to FIGS. 9 and 10, the second ring gear rotation detecting unit 220 includes a second magnet 221 and a second Hall sensor 223.

The second magnet 221, together with the second Hall sensor 223, detects the position of the second ring gear 140 when the grinder operates to grind coffee beans, and is used to revolve the water outlet 55 so that the water outlet 55 may avoid the coffee powder falling area P (see FIG. 13).

The second Hall sensor 223 detects the second magnet 221 provided at the outer setting position of the second ring gear 140.

Referring to FIG. 9, it may be seen that the first magnet 211 is provided on the first ring gear 130 constituting the driving unit 100, and the second magnet 221 is provided on the second ring gear 140.

Referring to FIG. 10, it can be seen that the first Hall sensor 213 is provided at a position facing the first magnet 211 in FIG. 9, while facing the first magnet 211. In addition, referring to FIG. 10, it can be seen that the second Hall sensor 223 is provided at a position facing the second magnet 221 in FIG. 9, while facing the second magnet 221.

The difference in the rotational angels of the first ring gear 130 and second ring gear 130 may be detected using the first magnet 211 and first Hall sensor 213, and the second magnet 221 and second Hall sensor 223. Accordingly, the revolving operation of the arm 150 that is connected between the first and second ring gears 130 and 140 and revolving in an arc direction may be controlled. In addition, by controlling the position of the water outlet 55 connected to the arm 150, the operation of the water outlet 55 may be controlled so that it may be avoided from the coffee powder falling area P (see FIG. 13) when coffee powder falls.

Meanwhile, the driving unit 100 includes a first ring gear housing 160 and a second ring gear housing 170.

The first ring gear housing 160 refers to a frame portion that rotatably accommodates the first ring gear 130 inside. The first ring gear housing 160 may have a ring shape larger than the first ring gear 130 in order to accommodate the first ring gear 130 inside.

In addition, the first ring gear housing 160 may be connected to the first motor 110. For example, the first ring gear housing 160 may further include an extension body for seating and connecting the first motor 110.

The second ring gear housing 170 may be connected to the lower side of the first ring gear housing 160.

The second ring gear housing 170 refers to a frame portion that rotatably accommodates the second ring gear 140 inside. The second ring gear housing 160 may have a ring shape larger than the second ring gear 140 in order to accommodate the second ring gear 140 inside.

In addition, the second ring gear housing 160 may be connected to the second motor 120. For example, the second ring gear housing 160 may include an extension on which at least a portion of the second motor 120 is assembled in order to dispose the second motor 120 in series in the vertical direction below the first motor 110.

In this way, the first ring gear housing 160 and second ring gear housing 170 connect the first ring gear 130 and second ring gear 140 in parallel upward and downward, and assemble the first motor 110 and second motor 120 to be disposed in series upward and downward. Accordingly, the rotational force output from the first and second motors 110 and 120 may be transmitted to the first and second rings 130 and 140 via the above-described first and second driving gears 113 and 123 and first and second idle gears 115 and 125 quietly and with low noise.

Meanwhile, referring to FIG. 11, the first Hall sensor 213 is fixed to one side of the first ring gear housing 160.

As a specific example, the first Hall sensor 213 is fixed to one side of the first ring gear housing 160 and is disposed to face each other by being spaced apart from the first magnet 211 provided on the outside of the first ring gear 130.

In addition, the second Hall sensor 223 is fixed to one side of the second ring gear housing 170.

As a specific example, the second Hall sensor 223 is fixed to one side of the second ring gear housing 170 and is disposed to face each other by being spaced apart from the second magnet 221 provided on the outside of the second ring gear 140.

In this way, the first and second Hall sensors 213 and 223 are supported on the first and second ring gear housings 160 and 170, respectively, and may be positioned upward and downward to face the first and second magnets 211 and 221.

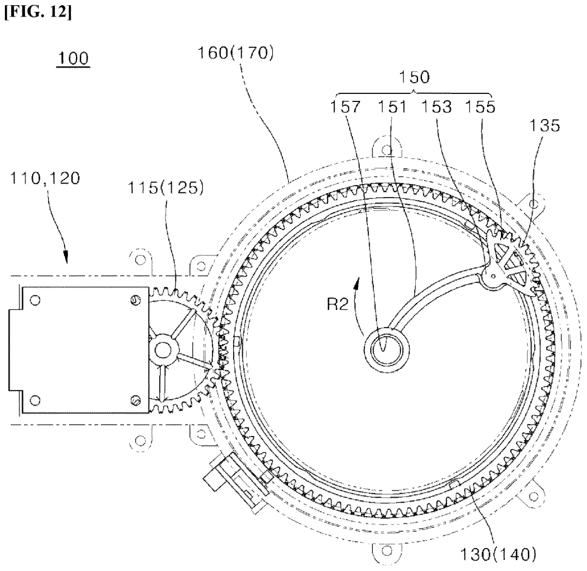

FIG. 12 is a diagram showing a state in which the water outlet is located in a center by an operation of the driving unit of the drip coffee machine. FIG. 13 is a diagram showing a state in which the water outlet is located to avoid the powder falling area P by an operation of the driving unit of the drip coffee machine.

Referring to FIGS. 12 and 13, the water outlet 55 (see FIG. 7) through which water falls may avoid the coffee powder falling area (P) before the grinder operation, and move to get closer to the interior wall of the first and second ring gears 130 and 140.

Here, the coffee powder falling area P refers to an area where coffee powder ground in the grinder 40 (see FIGS. 3 and 4) falls into the inside of the dripper 60 (see FIGS. 3 and 4).

The coffee powder falling area P may be located in the central portion of the inner circular space of the first and second ring gears 130 and 140.

Due to the difference in rotation angle between the first and second ring gears 130 and 140, the revolution angle of the revolving arm 150 is limited, and accordingly, the rotational angle of the water outlet 55 (see FIG. 7) is also limited. In other words, the maximum rotational phase, that is, the rotational displacement difference, of the first and second ring gears 130 and 140 is also mechanically limited.

Due to the difference in rotation angle between the first and second ring gears 130 and 140, the arc gear 155 of the arm 150 engaged with the internal gear part 135 of the first ring gear 130 rotates in a predetermined direction and angle

The insertion hole 157 formed at the other end of the arm body 151 rotates at a predetermined direction R2 and angle with respect to the revolving shaft 153. As a result, avoidance operation of the water outlet 55 (see FIG. 7) contact-connected to the insertion hole 157 may be possible.

In more detail, until the second magnet 221 provided on the second ring gear 140 is aligned to face the second Hall sensor 223, the first ring gear 130 and second ring gear 140 may be rotated at constant speed.

Also, after the second magnet 221 is detected by the second Hall sensor 223, the first magnet 211 provided on the first ring gear 130 is aligned to face the first Hall sensor 213. Thereafter, only the second ring gear 140 may be rotated to move the water outlet 55 (see FIG. 7) to a default position.

In this way, the water outlet 55 (see FIG. 7) that supplies water into the inside of the dripper 60 (see FIGS. 3 and 4) may be avoided from the coffee powder falling area P when the grinder is in operation.

Accordingly, it is possible to prevent ground coffee powder from accumulating in the water outlet 55 (see FIG. 7).

In addition, due to the avoidance action of the water outlet 55 (see FIG. 7), the ground coffee powder from the grinder 40 (see FIGS. 3 and 4) may not be interrupted when supplied to the dripper 60 (see FIGS. 3 and 4). As a result, coffee powder may be uniformly accumulated in the dripper 60 (see FIGS. 3 and 4), so that the mixing action between water and coffee powder may be uniform when water is supplied.

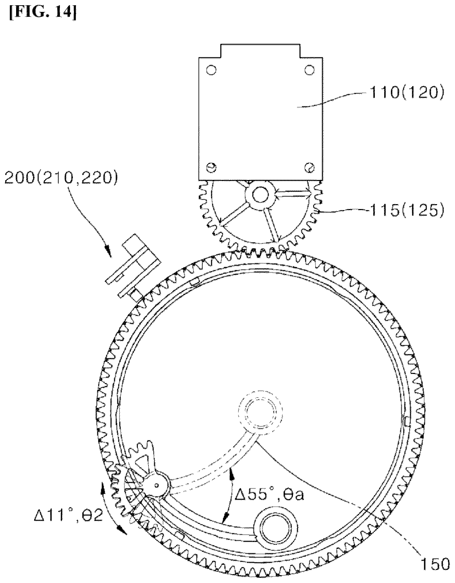

Hereinafter, the spiral motion of the water outlet according to the driving unit of the drip coffee machine according to an embodiment of the present invention will be described with reference to FIG. 14.

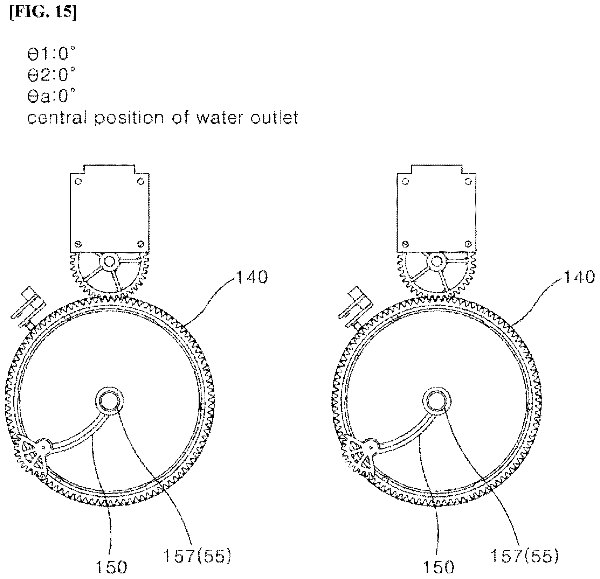

FIG. 14 is a conceptual diagram illustrating a spiral motion according to the driving unit of the drip coffee machine according to an embodiment of the present invention, FIGS. 15 to 26 are conceptual diagrams showing a spiral motion for each step according to the driving unit of the drip coffee machine according to an embodiment of the present invention. In FIG. 14, for convenience of explanation, the first ring gear is not shown, and only the second ring gear is shown.

It is assumed a case in which an angle at which the water outlet connected to the insertion hole of the arm 150 moves from the central position of the second ring gear 140 to the avoidance position (i.e., the position where it touches the inner wall of the second ring gear 140) is Δ55°, and in order to rotate the arm 150 by 55°, the upper first ring gear (not shown) must rotate relative to the lower second ring gear 140 by Δ11°.

When the water outlet rotates from the central position to the second ring gear 140 by a 45° angle θ1 per unit time and to the first ring gear (not shown) by a 46° angle θ2 per unit time (i.e., the first ring gear 140 rotates faster than the second ring gear), the arm 150 rotates at a relative position angle θa of 5°.

Therefore, when the second ring gear 140 rotates at a 495° angle θ1, the first ring gear (not shown) rotates at a 506° angle θ2 and the arm 150 rotates at a relative position angle θa of 55°, and thus, the water outlet moves to the avoidance position.

In addition, when the water outlet rotates from the avoidance position to the second ring gear 140 by a 45° angle θ1 per unit time and to the first ring gear (not shown) rotates at a 44° angle θ2 per unit time (i.e. the first ring gear rotates more slowly than the second ring gear), the arm 150 rotates at a relative position angle θa of -5°.

Therefore, when the second ring gear 140 rotates at a 495° angle θ1, the first ring gear (not shown) rotates at a 484° angle θ2, and the arm 150 rotates at a relative position angle θa of -55°, and thus, the water outlet returns to its central position.

To be more specific, referring to FIGS. 15 to 26, the spiral motion of the water outlet unit according to the driving unit is shown for each step.

Referring to FIG. 15, the angle θ1 of the second ring gear 140 is 0°, the angle θ2 of the first ring gear (not shown) is 0°, and the angle of the arm 150 (θa) is 0°. The water outlet 55 contact-connected to the insertion hole 157 is located in the center.

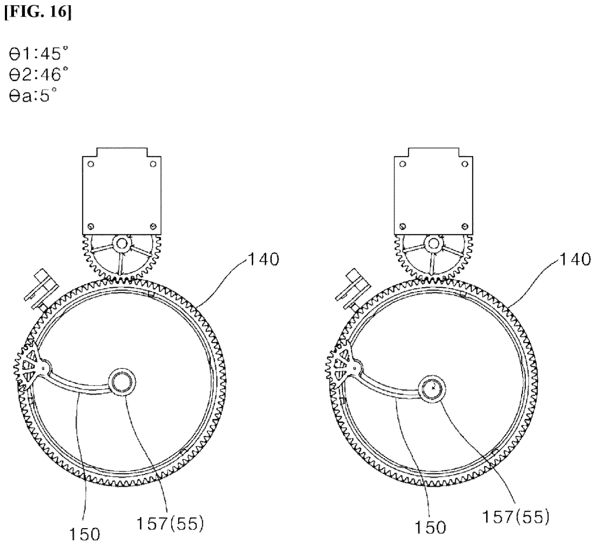

Referring to FIG. 16, the angle θ1 of the second ring gear 140 is 45°, the angle θ2 of the first ring gear (not shown) is 46°, and the angle of the arm 150 (θa) is 5°. The water outlet 55 moves slightly from the center in the direction of the arrow.

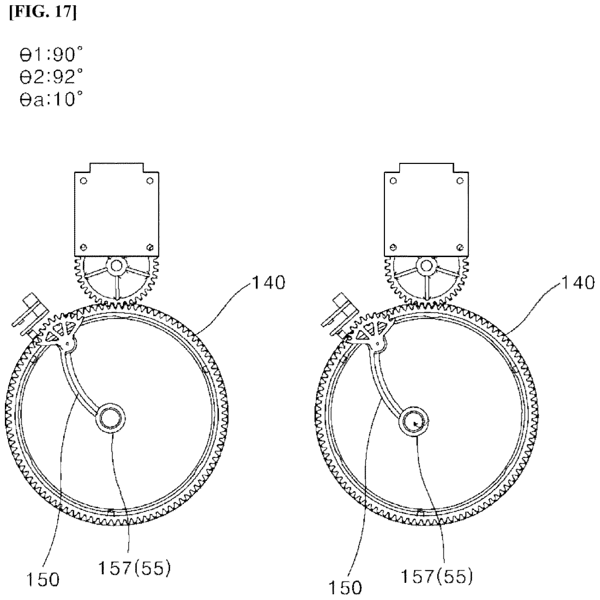

Referring to FIG. 17, the angle θ1 of the second ring gear 140 is 90°, the angle θ2 of the first ring gear (not shown) is 92°, and the angle of the arm 150 (θa) is 10°. The water outlet 55 moves a little further from the center in the direction of the arrow.

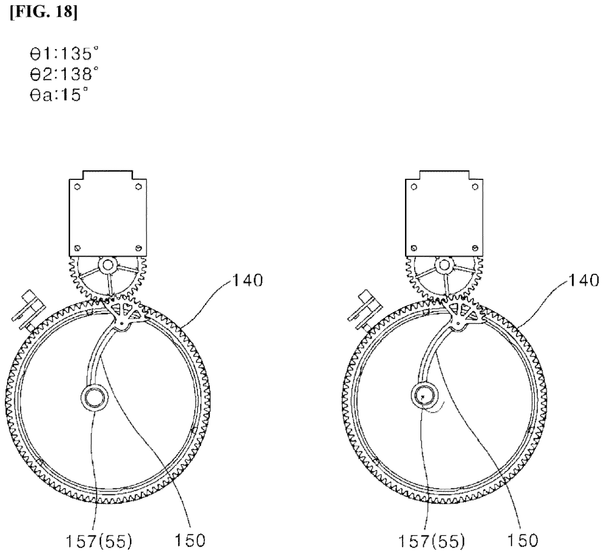

Referring to FIG. 18, the angle θ1 of the second ring gear 140 is 135°, the angle θ2 of the first ring gear (not shown) is 138°, and the angle of the arm 150 (θa) is 15°. The water outlet 55 moves a little further from the center in the direction of the arrow.

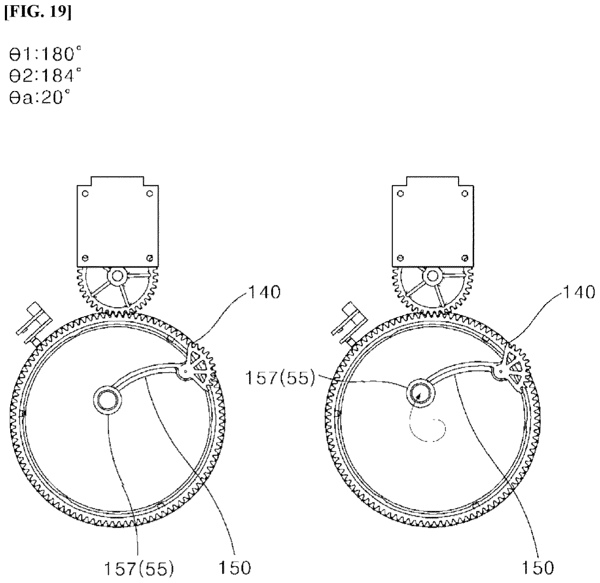

Referring to FIG. 19, the angle θ1 of the second ring gear 140 is 180°, the angle θ2 of the first ring gear (not shown) is 184°, and the angle of the arm 150 (θa) is 20°. The water outlet 55 moves a little further from the center in the direction of the arrow.

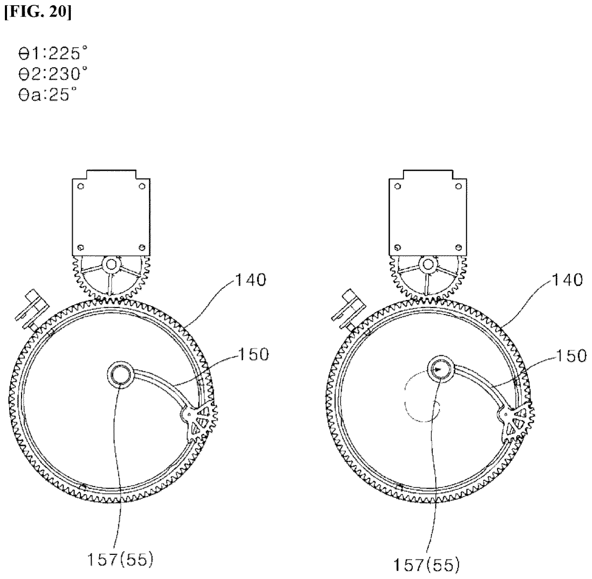

Referring to FIG. 20, the angle θ1 of the second ring gear 140 is 225°, the angle θ2 of the first ring gear (not shown) is 230°, and the angle of the arm 150 (θa) is 25°. The water outlet 55 moves a little further from the center in the direction of the arrow.

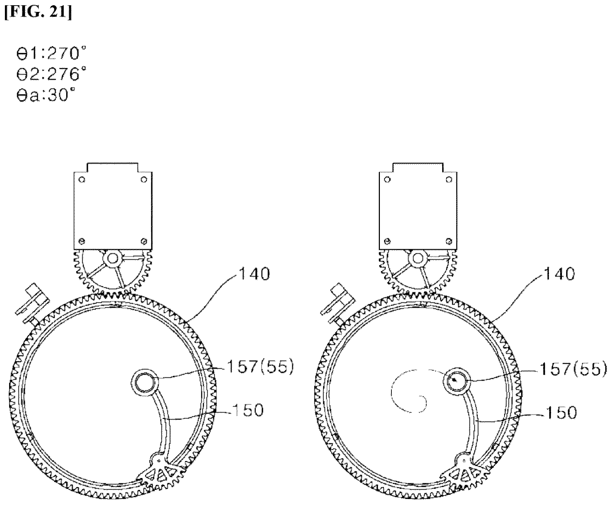

Referring to FIG. 21, the angle θ1 of the second ring gear 140 is 270°, the angle θ2 of the first ring gear (not shown) is 276°, and the angle of the arm 150 (θa) is 30°. The water outlet 55 moves a little further from the center in the direction of the arrow.

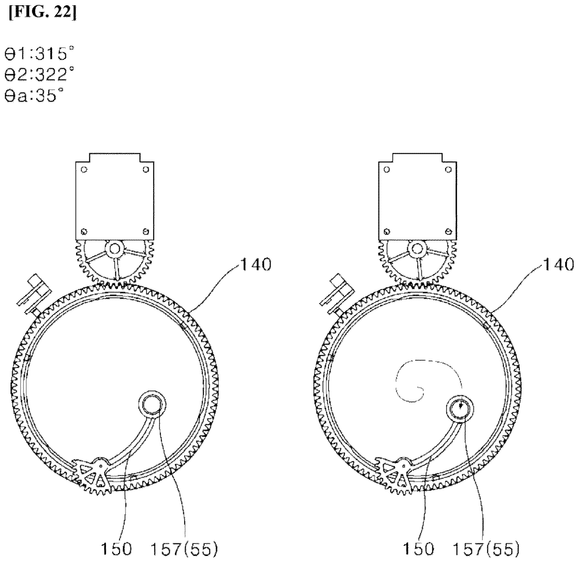

Referring to FIG. 22, the angle θ1 of the second ring gear 140 is 315°, the angle θ2 of the first ring gear (not shown) is 322°, and the angle of the arm 150 (θa) is 35°. The water outlet 55 moves a little further from the center in the direction of the arrow.

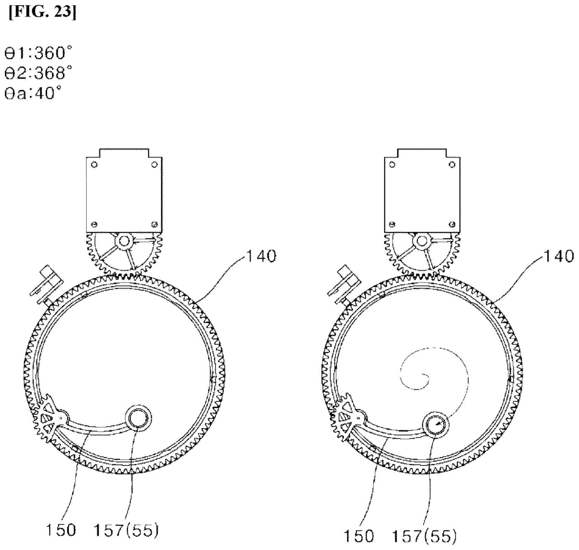

Referring to FIG. 23, the angle θ1 of the second ring gear 140 is 360°, the angle θ2 of the first ring gear (not shown) is 368°, and the angle of the arm 150 (θa) is 40°. The water outlet 55 moves a little further from the center in the direction of the arrow.

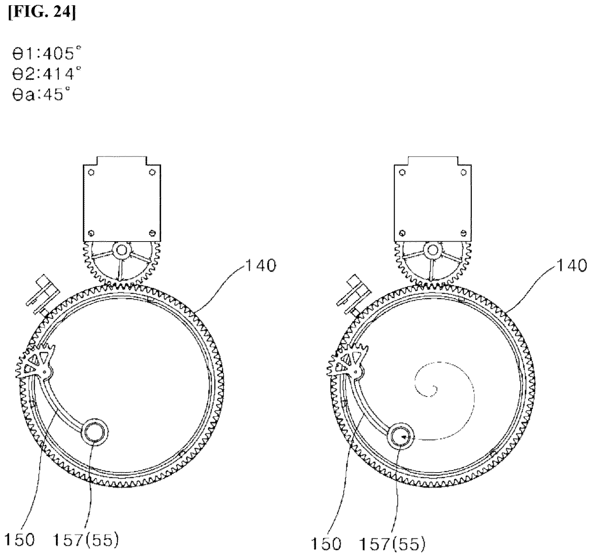

Referring to FIG. 24, the angle θ1 of the second ring gear 140 is 405°, the angle θ2 of the first ring gear (not shown) is 414°, and the angle of the arm 150 (θa) is 45°. The water outlet 55 moves a little further from the center in the direction of the arrow.

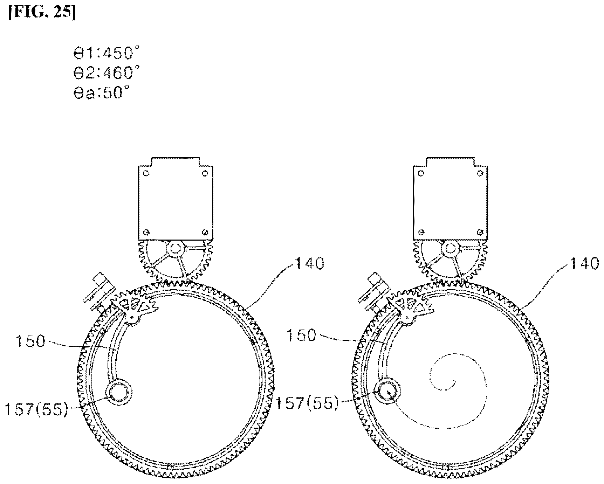

Referring to FIG. 25, the angle θ1 of the second ring gear 140 is 450°, the angle θ2 of the first ring gear (not shown) is 460°, and the angle of the arm 150 (θa) is 50°. The water outlet 55 moves a little further from the center in the direction of the arrow.

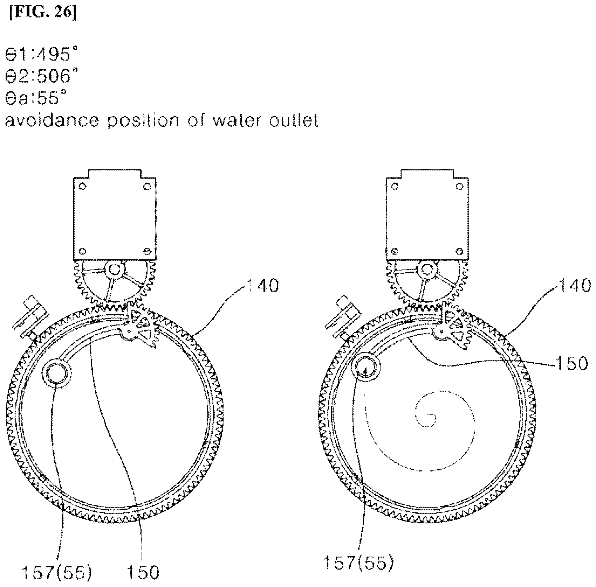

Referring to FIG. 26, the angle θ1 of the second ring gear 140 is 495°, the angle θ2 of the first ring gear (not shown) is 506°, and the angle of the arm 150 (θa) is 55°. The water outlet 55 moves slightly further from the center in the direction of the arrow, making it possible to implement a spiral motion. In addition, referring to FIG. 26, it can be seen that the water outlet 55 connected to the insertion hole 157 of the arm 150 is avoided from the inner wall of the second ring gear 140 while being close to the inner wall of the second ring gear 140.

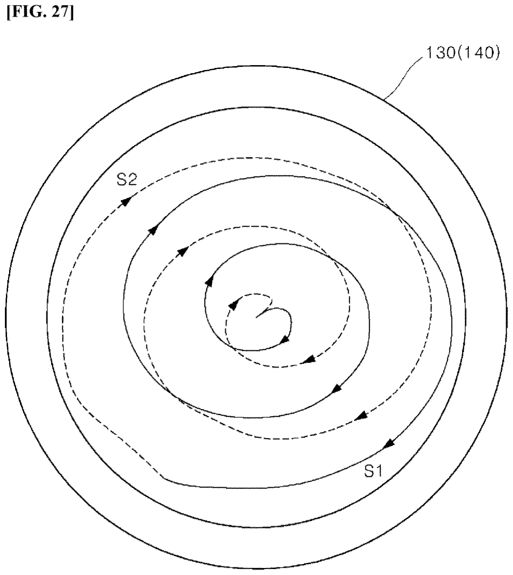

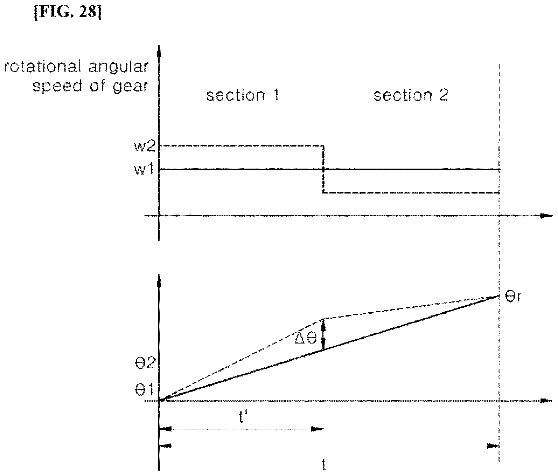

FIG. 27 is a diagram showing an exemplary trajectory of a spiral motion according to the driving unit of the drip coffee machine according to an embodiment of the present invention, and FIG. 28 is a graph showing a gear rotation angular speed and gear rotation angle change for implementing spiral motion of sections 1 and 2 in FIG. 27.

Based on clockwise rotation, section 1 S1 is the first half cycle of the spiral motion, in which the water outlet rotates n times while moving outward from the central position.

Section 2 S2 is the second half cycle of the spiral motion, showing the trajectory in which the water outlet that has moved outward rotates n times while moving inward, and then returns to the central position.

In this case, as shown in FIG. 28, the spiral motion of the water outlet can be implemented by controlling the above-described first and second motors to adjust the rotational speed and rotation angle of the first and second ring gears 130 and 140, respectively, and it may also set the rotation radius. In FIG. 28, w1 is the rotational angular velocity of the second ring gear 140 located on the lower side, and w2 is the rotational angular velocity of the first ring gear 130 located on the upper side. θ1 is the rotation angle of the second ring gear 140 located on the lower side, θ2 is the rotation angle of the first ring gear 130 located on the upper side, θr is the set rotation angle of the first and second ring gears, and Δθ is the difference in rotation angle between the first and second ring gears 130 and 140.

As described above, the present invention has been described with reference to the illustrative drawings, but the present invention is not limited to the embodiments and drawings disclosed herein, and various modifications may be made by those skilled in the art within the scope of the technical idea of the present invention. In addition, although the operational effects according to the configuration of the present invention were not explicitly described and explained while explaining the embodiments of the present invention, it is apparent that the predictable effects due to the configuration should also be recognized.

## Claims

1. A drip coffee machine, comprising:
a dripper that receives coffee powder and extracts liquid coffee;
a water outlet unit that includes a water outlet that allows water to fall into an inside of the dripper,
a driving unit that changes a position of the water outlet unit within an upper drip area of the dripper; and
a sensor unit that detects a position of the driving unit.

2. The drip coffee machine of claim 1, wherein the driving unit includes:
a first ring gear that rotates at a first set speed; and
a second ring gear that is coaxial with the first ring gear and is disposed to face a lower portion of the first ring gear and rotates at a second set speed.

3. The drip coffee machine of claim 2, wherein the driving unit further includes an arm that has one end connected between the first and second ring gears, and the other end contact-connected to at least a portion of the water outlet unit, and revolves the water outlet unit according to a rotation angle difference between the first and second ring gears.

4. The drip coffee machine of claim 1, wherein the driving unit includes:
a first ring gear that rotates at a first set speed; and
a second ring that is coaxial with the first ring gear and is disposed to face a lower portion of the first ring gear and rotates at a second set speed,
wherein the driving unit further includes:
a first motor that provides a rotational force to the first ring gear; and
a second motor that provides the rotational force to the second ring gear.

5. The drip coffee machine of claim 4, wherein the first motor includes:
a first output shaft that rotates at a set speed; and
a first driving gear that is coupled to the first output shaft to rotate,
wherein the second motor includes:
a second output shaft that rotates at a set speed; and
a second driving gear that is coupled to the second output shaft and rotates,
wherein the first and second motors are arranged in the same center upward and downward.
the first output shaft protrudes from a lower portion of the first motor,
the second output shaft protrudes from an upper portion of the second motor and face the first output shaft,
the first and second driving gears are located parallel to each other at intervals upward and
downward.

6. The drip coffee machine of claim 1, wherein the driving unit includes:
a first ring gear that rotates at a first set speed; and
a second ring gear that is coaxial with the first ring gear and is disposed to face a lower portion of the first ring gear and rotates at a second set speed,
the sensor unit includes a ring gear rotation detecting unit that detects the rotation of the first and second ring gears.

7. The drip coffee machine of claim 6, wherein the ring gear rotation detecting unit includes:
a first ring gear rotation detecting unit that detects the rotation of the first ring gear; and
a second ring gear rotation detecting unit that detects the rotation of the second ring gear,
wherein the first ring gear rotation detecting unit includes:
a first magnet that is installed on an outside of the first ring gear, and
a first Hall sensor that detects a position of the first magnet,
wherein the second ring gear rotation detecting unit includes:
a second magnet that is installed on an outside of the second ring gear; and
a second Hall sensor that detects a position of the second magnet.

8. The drip coffee machine of claim 6, the driving unit includes:
a first ring gear housing that accommodates the first ring gear inside, and a second ring gear housing that is connected to a lower side of the first ring gear housing and accommodates the second ring gear inside,
wherein the first Hall sensor is fixed to one side of the first ring gear housing and is disposed to face the first magnet by being spaced apart from the first magnet on an outside of the first ring gear,
the second Hall sensor is fixed to one side of the second ring gear housing and is disposed to face the second magnet by being spaced apart from the second magnet on an outside of the second ring gear,
the first and second Hall sensors are formed at positions where the first and second Hall sensor face each other upward and downward..

9. The drip coffee machine of claim 1, wherein the driving unit includes:
a first ring gear that rotates at a first set speed;
a second ring that is disposed at the same center as the first ring gear and is disposed to face a lower portion of the first ring gear, and rotates at a second set speed;
a first motor that includes a first output shaft and a first driving gear coupled to the first output shaft and rotating to provide a rotational force to the first ring gear; and
a second motor that includes a second output shaft and a second driving gear coupled to the second output shaft and rotating to provide the rotational force to the second ring gear.
wherein the sensor unit includes a motor motion detecting unit that detects an operation of each of the first and second motors.

10. The drip coffee machine of claim 9, wherein the motor motion detecting unit includes:
a first driving gear rotation detecting unit that detects the rotation of the first driving gear; and
a second driving gear rotation detecting unit that detects the rotation of the second driving gear.

11. The drip coffee machine of claim 9, wherein the motor motion detecting unit includes:
a first driving gear rotation detecting unit that detects the rotation of the first driving gear; and
a second driving gear rotation detecting unit that detects the rotation of the second driving gear,
wherein the first driving gear rotation detecting unit is located opposite the first driving gear and includes a first photo interrupter that detects the rotation of the first driving gear,
the second driving gear rotation detecting unit is located opposite the second driving gear and includes a second photo interrupter that detects the rotation of the second driving gear.

12. The drip coffee machine of claim 11, wherein the first and second photo interrupters are disposed to be spaced apart from each other on a single board vertically disposed on one sides of the first and second driving gears.

13. The drip coffee machine of claim 9, wherein the motor motion detecting unit includes:
a first driving gear rotation detecting unit that detects the rotation of the first driving gear; and
a second driving gear rotation detecting unit that detects the rotation of the second driving gear,
wherein the first driving gear rotation detecting unit is installed on the first motor and includes a first encoder that detects the rotation of the first motor,
the second driving gear rotation detecting unit is installed on the second motor and includes a second encoder that detects the rotation of the second motor.

14. The drip coffee machine of claim 9, wherein the driving unit includes:
a first idle gear that is geared between the first driving gear and the first ring gear and transmits the rotational force of the first motor to the first ring gear; and
a second idle gear that is geared between the second driving gear and the second ring gear and transmits the rotational force of the second motor to the second ring gear.
wherein the first and second idle gears are disposed in the same center upward and downward.
the first and second idle gears are axially connected to an idle shaft,
wherein the idle shaft includes:
a first shaft body to which the first idle gear is axially connected;
a second shaft body that extends to a lower portion of the first shaft body and to which the second idle gear is axially connected; and
a flange portion that is formed at a boundary between the two and second shaft bodies.

15. The drip coffee machine of claim 1, wherein based on the detection result of the sensor unit, the driving unit avoids a position of the water outlet from an area where the ground coffee powder falls.

16. The drip coffee machine of claim 1, further comprising a grinder that is located at an upper portion of the dripper, grinds a coffee bean and supplies the ground coffee powder to the dripper,
wherein the driving unit includes:
a first ring gear that rotates at a first set speed;
a second ring gear that is coaxial with the first ring gear and is disposed to face a lower portion of the first ring gear and rotates at a second set speed;
an arm that revolves the water outlet unit according to a rotation angle difference between the first and second ring gears,
wherein the sensor unit includes:
a first ring gear rotation detecting unit that detects the rotation of the first ring gear; and
a second ring gear rotation detecting unit that detects the rotation of the second ring gear,
wherein the driving unit rotates the arm based on the rotation detection results of the first and second ring gears detected by the first and second ring gear rotation detection units to avoid a position of the water outlet from an area where the coffee powder ground from the grinder falls.

17. A drip coffee machine, comprising:
a case;
a water tank that is located at a rear upper end of the case and stores water;
a hopper that is located at a front upper end of the case and stores coffee beans;
a grinder that is located at a lower portion of the hopper and grinds a coffee bean supplied from the hopper;
a dripper that is located at a lower portion of the grinder, receives coffee powder ground in the grinder to extract liquid coffee;
a water outlet unit that includes a water outlet that allows water to fall into an inside of the dripper'
a driving unit that changes a position of the water outlet within an upper drip area of the dripper, and
a sensor unit that detects a position of the driving unit.

18. The drip coffee machine of claim 17, wherein the driving unit includes:
a first ring gear that rotates at a first set speed;
a second ring that is disposed at the same center as the first ring gear and is disposed to face a lower portion of the first ring gear, and rotates at a second set speed; and
an arm that includes one end connected between the first and second ring gears, and the other end contact-connected to at least a portion of the water outlet unit, and revolves the water outlet unit according to a rotation angle difference between the first and second ring gears,
wherein the driving unit further includes:
a first motor that provides a rotational power to the first ring gear; and
a second motor that provides the rotational power to the second ring gear.

19. The drip coffee machine of claim 17, wherein the driving unit includes:
a first ring gear that rotates at a first set speed; and
a second ring gear that is coaxial with the first ring gear and is disposed to face a lower portion of the first ring gear and rotates at a second set speed,
wherein the sensor unit further includes a ring gear rotation detecting unit that detects the rotation of the first and second ring gears.

20. The drip coffee machine of claim 19, wherein the ring gear rotation detecting unit includes:
a first ring gear rotation detecting unit that detects the rotation of the first ring gear, and
a second ring gear rotation detecting unit that detects the rotation of the second ring gear,
wherein the first ring gear rotation detecting unit includes:
a first magnet that is installed on an outside of the first ring gear; and
a first Hall sensor that detects a position of the first magnet,
wherein the second ring gear rotation detecting unit includes:
a second magnet that is installed on an outside of the second ring gear; and
a second Hall sensor that detects a position of the second magnet.

21. The drip coffee machine of claim 17, wherein the driving unit includes:
a first ring gear that rotates at a first set speed;
a second ring gear that is disposed at the same center as the first ring gear and faces a lower portion of the first ring gear, and rotates at a second set speed'
a first motor that includes a first output shaft and a first driving gear coupled to the first output shaft and rotating to provide a rotational force to the first ring gear; and
a second motor that includes a second output shaft and a second driving gear coupled to the second output shaft and rotating to provide the rotational power to the second ring gear,
wherein the sensor unit includes a motor motion detecting unit that detects an operation of each of the first and second motors.

22. The drip coffee machine of claim 21, wherein the motor motion detecting unit includes:
a first driving gear rotation detecting unit that detects the rotation of the first driving gear; and
a second driving gear rotation detecting unit that detects the rotation of the second driving gear,
wherein the first driving gear rotation detecting unit is located opposite the first driving gear and includes a first photo interrupter that detects the rotation of the first driving gear,
the second driving gear rotation detecting unit is located opposite the second driving gear and includes a second photo interrupter that detects the rotation of the second driving gear.
